(19) Europäisches Patentamt
European Patent Office
Office européen des brevets

(11)  **EP 1 267 566 B1**

(12)  **EUROPÄISCHE PATENTSCHRIFT**

(45) Veröffentlichungstag und Bekanntmachung des Hinweises auf die Patenterteilung:
**24.09.2008  Patentblatt 2008/39**

(51) Int Cl.:
*H04N 1/58* *(2006.01)*

(21) Anmeldenummer: **02005723.8**

(22) Anmeldetag: **13.03.2002**

(54) **Verfahren zur Erzeugung von Überfüllrahmen in einer Druckseite**

Method for creating trapping contours for a page to be printed

Procédé de production de contours de remplissage par superposition dans une page à imprimer

(84) Benannte Vertragsstaaten:
**DE FR GB**

(30) Priorität: **15.06.2001  DE 10128858**

(43) Veröffentlichungstag der Anmeldung:
**18.12.2002  Patentblatt 2002/51**

(73) Patentinhaber: **Heidelberger Druckmaschinen Aktiengesellschaft**
**69115 Heidelberg (DE)**

(72) Erfinder: **Kohn, Michael**
**24536 Neumünster (DE)**

(56) Entgegenhaltungen:
**EP-A- 0 539 953**          **EP-A- 0 648 041**
**WO-A-99/09734**          **US-A1- 2003 025 945**

• **P.-E. DANIELSSON: "Euclidean Distance Mapping" COMPUTER GRAPHICS AND IMAGE PROCESSING, Bd. 14, 1980, Seiten 227-248, XP008022858**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf das Gebiet der digitalen Bildverarbeitung in der Reproduktionstechnik und betrifft ein Verfahren zur Erzeugung von Überfüllrahmen an Farbgrenzen in einer Druckseite. Solche Überfüllrahmen dienen zur Reduzierung der durch Registerfehler in der Druckmaschine erzeugten Störungen, d.h. der Fehler, die dadurch entstehen, daß die Druckfarben nicht genau deckungsgleich übereinandergedruckt werden sondern etwas gegeneinander verschoben sind.

In der Reproduktionstechnik werden Druckvorlagen für Druckseiten erzeugt, die alle zu druckenden Elemente wie Texte, grafische Objekte und Bilder enthalten. Im Fall der elektronischen Herstellung der Druckvorlagen liegen diese Elemente in Form von digitalen Daten vor. Für ein Bild werden die Daten z.B. erzeugt, indem das Bild in einem Scanner punkt- und zeilenweise abgetastet wird, jeder Bildpunkt in Farbkomponenten zerlegt wird und die Farbwerte dieser Komponenten digitalisiert werden. Die Daten für Texte und grafische Objekte werden im allgemeinen von Textverarbeitungs- und Zeichenprogrammen direkt in einem Rechner erzeugt. Je nach dem später verwendeten Ausgabeprozess, z.B. Ausgabe auf einem Farbdrucker oder Drucken in einer konventionellen Druckmaschine, werden die Daten für die Seitenelemente in den Farbkomponenten Rot, Grün und Blau (RGB) oder in den Druckfarben des Vierfarbdrucks Cyan, Magenta, Gelb und Schwarz (CMYK) erzeugt und gespeichert. Die Druckfarben werden in dem Farbdrucker bzw. in der Druckmaschine übereinander auf den Bedruckstoff (z.B. das Papier) gedruckt.

Im weiteren Arbeitsablauf werden die digitalisierten Texte, grafischen Objekte und Bilder in einer Bearbeitungsstation unter Sichtkontrolle auf einem Farbmonitor in vielfältiger Weise nach den Vorgaben eines Layouts bearbeitet, z.B. farblich korrigiert oder in der Anordnung und Form verändert, und schließlich zu einer Druckseite montiert. Die Druckseitendaten werden dann in ein Datenformat umgewandelt, das für die Ausgabe geeignet ist, z.B. in die Seitenbeschreibungssprache PostScript, und gespeichert. Für jede der Druckfarben CMYK werden dabei separate Druckseitendaten erzeugt, die als Farbauszugdaten bezeichnet werden. Die Farbauszugdaten werden mit einem Film- bzw. Plattenrecorder in hoher Auflösung auf Filmmaterial oder direkt auf Druckplatten aufgezeichnet. Es gibt auch digitale Druckmaschinen, die ohne Druckplatten arbeiten. In dem Fall werden die Farbauszugdaten direkt zur digitalen Druckmaschine übertragen und dort auf dem Bedruckstoff ausgedruckt.

Der Stand der Technik und die Erfindung werden nachfolgend anhand der Figuren 1 bis 14 näher beschrieben.

Es zeigen:

Fig. 1        die Farbauszüge Y, M und K für ein Druckbeispiel,

Fig. 2        den Übereinanderdruck der Farbauszüge Y, M, K ohne Registerfehler in der Druckmaschine,

Fig. 3        den Übereinanderdruck der Farbauszüge Y, M, K mit einem Registerfehler in der Druckmaschine,

Fig. 4        einen Überfüllrahmen für den Farbauszug Y,

Fig. 5a       eine Bildpunktmatrix mit einem Objekt auf einer Hintergrundfläche,

Fig. 5b       eine Matrix von Abstandsvektoren zu Beginn der Distanzkartierung,

Fig. 6a       einen Punktoperator F1,

Fig. 6b       einen Punktoperator F2,

Fig. 7a       eine Matrix von Abstandsvektoren nach Abschluss der Distanzkartierung,

Fig. 7b       eine Matrix von Abstandsbeträgen nach Abschluss der Distanzkartierung,

Fig. 8        eine Lauflänge mit den Abstandsvektoren DA und DE,

Fig. 9a       die aktuelle Lauflänge L0 und die benachbarten Lauflängen L1, L2, L3, L4 für den ersten Durchlauf,

Fig. 9b       die aktuelle Lauflänge L0 und die benachbarten Lauflängen L5, L6, L3, L4 für den zweiten Durchlauf,

Fig. 10a      eine Anordnung mit der aktuellen Lauflänge L0 und drei benachbarten Lauflängen,

Fig. 10b      eine Anordnung mit der aktuellen Lauflänge L0 und zwei benachbarten Lauflängen,

Fig. 11    ein Beispiel für die Bestimmung des Abstandsvektors DA(L0) bei einem Farbwechsel zwischen benachbarten Lauflängen,

Fig. 12    ein Beispiel für die Bestimmung des Abstandsvektors DA(L0), wenn kein Farbwechsel zwischen benachbarten Lauflängen vorliegt,

Fig. 13a    ein Beispiel zur Erläuterung der Aufteilung der aktuellen Lauflänge L0,

Fig. 13b    die Anordnung der Lauflängen nach der Aufteilung der aktuellen Lauflänge L0, und

Fig. 14    die Abtrennung eines zum Überfüllrahmen gehörenden Teilstücks Lu der aktuellen Lauflänge L0.

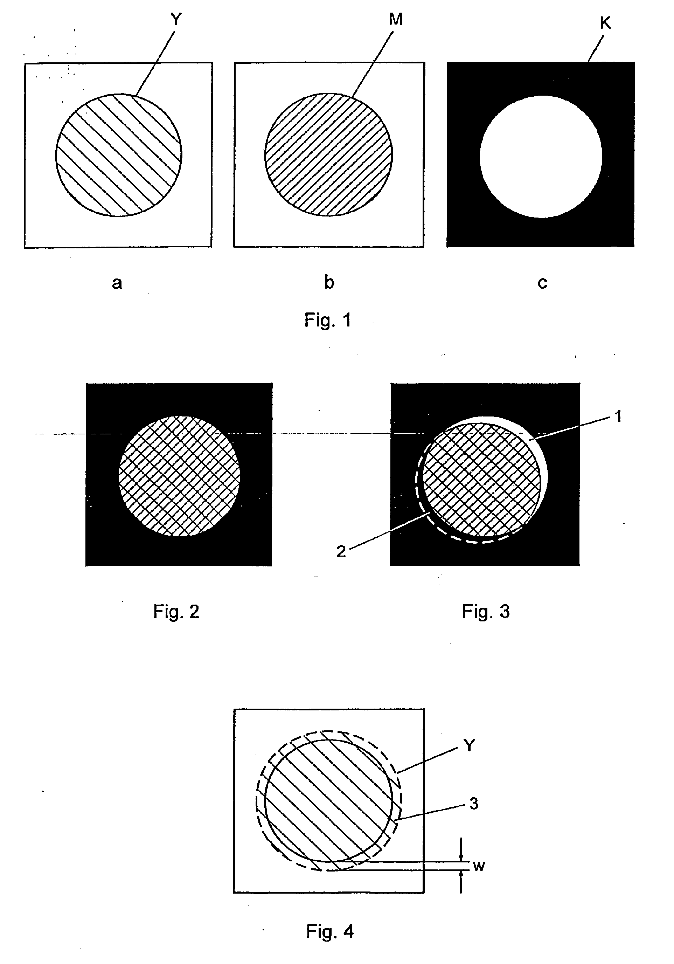

Ein Problem in der Drucktechnik sind die Registerfehler in der Druckmaschine, d.h. Fehler, die dadurch entstehen, daß die Druckfarben in den Druckwerken, durch die das Papier nacheinander läuft, nicht genau deckungsgleich übereinandergedruckt werden sondern etwas gegeneinander verschoben sind. Diese Fehler sollen an einem einfachen Beispiel veranschaulicht werden, bei dem ein roter Kreis in einer schwarzen Hintergrundfläche gedruckt wird. Fig. 1a und 1b zeigen die Farbauszüge Y und M, aus deren Übereinanderdruck der rote Kreis entsteht, und Fig. 1c zeigt den Farbauszug K der schwarzen Hintergrundfläche, in der die Fläche des Kreises ausgespart ist. Fig. 2 zeigt das Druckergebnis, wenn die Farbauszüge Y, M und K in der Druckmaschine exakt übereinandergedruckt werden. Die Farbauszüge Y und M füllen vollständig die ausgesparte Kreisfläche im Farbauszug K aus. Fig. 3 zeigt das Druckergebnis, wenn in der Druckmaschine ein Registerfehler aufgetreten ist. In diesem Beispiel ist der Farbauszug K gegenüber den Farbauszügen Y und M nach rechts oben verschoben worden, so daß die Farbauszüge Y und M die ausgesparte Kreisfläche im Farbauszug K nicht mehr vollständig ausfüllen und ein unbedruckter Streifen 1 entsteht. Da der unbedruckte Streifen 1 die Papierfarbe hat, d.h. in der Regel weiß ist, fällt er zwischen der roten und der schwarzen Farbe sehr stark auf und wird als störend empfunden. Durch die Verschiebung der Farbauszüge entsteht auch ein Streifen 2, in dem alle drei Farbauszüge Y, M und K übereinander gedruckt sind. Da hier die helleren Druckfarben Y und M auf die dunkle Druckfarbe K gedruckt werden, ist der Steifen 2 ebenfalls dunkel und stört im Druckergebnis nicht. In Fig. 3 ist zur Verdeutlichung eine sehr starke Verschiebung der Farbauszüge gezeigt. Aber auch bei einer geringeren Verschiebung, wie sie im praktischen Druckbetrieb auftritt, sind die dadurch entstehenden unbedruckten Streifen sehr störend und es müssen Gegenmaßnahmen zur Beseitigung oder Reduzierung dieser Fehler durchgeführt werden.

Eine Möglichkeit zur Beseitigung bzw. Reduzierung des beschriebenen störenden Effekts durch die Registerfehler ist eine genauere Regelung des Druckplattenregisters bzw. der Papierführung in der Druckmaschine. Das ist jedoch aufwendig und teuer, und eine verbesserte Regelung kann auch nicht an jeder älteren Druckmaschine nachgerüstet werden.

Eine zweite Möglichkeit ist das sogenannte Überfüllen (engl. trapping) bei der Vorbereitung der Farbauszugdaten in der Reproduktionstechnik. Dabei wird an bestimmten Farbgrenzen in einigen Farbauszügen ein Überfüllrahmen erzeugt, in anderen Farbauszügen nicht. Durch das Überfüllen wird sichergestellt, daß bei Registerfehlern in der Druckmaschine noch eine genügend große Überlappung der grafischen Objekte in den Farbauszügen vorhanden ist, so daß keine störenden unbedruckten Streifen entstehen können. Für welche Farbauszüge und für welche Farbgrenzen ein Überfüllrahmen erzeugt werden muss und für welche nicht, hängt von den Farben innerhalb der grafischen Objekte im Verhältnis zu den Farben in ihrer unmittelbaren Umgebung ab. Eine allgemeine Regel ist dabei, daß die helleren Farben gegenüber den dunkleren Farben überfüllt werden. Dadurch werden die Umrisse der konturbestimmenden dunkleren Farben nicht verändert, und die Formen der grafischen Objekte bleiben trotz der Überlappung der Farbauszüge beim Übereinanderdruck subjektiv erhalten.

Fig. 4 zeigt einen Überfüllrahmen 3 für den Farbauszug Y aus dem Beispiel von Fig. 1, wobei der Überfüllrahmen ein Kreisring der Überfüllweite w ist. Wenn der Kreis in den Farbauszügen Y und M durch den Überfüllrahmen 3 vergrößert wird, die Aussparung der Kreisfläche im Farbauszug K aber nicht, dann können auch bei einer Verschiebung der Farbauszüge keine störenden Streifen entstehen. Die Überfüllweite w des Überfüllrahmens 3 muss so groß gewählt werden, daß die zu erwartende maximale Verschiebung abgedeckt wird, d.h. sie ist abhängig von der Qualität und dem Alter der verwendeten Druckmaschine.

Nach dem Stand der Technik werden die Überfüllrahmen erzeugt, indem in einer Druckseite zunächst analysiert wird, welche grafischen Objekte darin enthalten sind und wo sie aneinander grenzen. Abhängig vom Typ der Objekte und von den Farben auf beiden Seiten einer Farbgrenze wird dann entschieden, welches der Objekte auf welchem Teil seines Umrisses einen Überfüllrahmen erhält und welche Farbe der Überfüllrahmen bekommt. Unter einem grafischen Objekt wird hier eine Fläche beliebiger Form verstanden, die in beliebiger Weise mit Farbwerten gefüllt ist. Im einfachsten Fall ist die Fläche gleichmäßig mit einer konstanten Farbe gefüllt. Sie kann aber auch einen Farbverlauf enthalten, d.h. eine kontinuierliche Variation der Farben in einem bestimmten Farbbereich. Ein grafisches Objekt kann auch abgetastete Bilddaten oder ein Muster von verschiedenen Farbwerten enthalten. Die Art der Farbfüllung bestimmt den Typ eines

EP 1 267 566 B1

grafischen Objekts, z.B. "gleichmäßig gefärbte Fläche" (z.B. Grafik, Text), "Farbverlauf" oder "Bild".

In der Patentschrift US 5,113,249 ist ein solches Verfahren zur Erzeugung von Überfüllrahmen nach dem Stand der Technik beschrieben. Dort wird der Typ eines grafischen Objektes mit "area type" bezeichnet, und abhängig von den "area types", die sich auf beiden Seiten einer Farbgrenze befinden, wird entschieden, ob ein Überfüllrahmen erzeugt werden muss, welcher der beiden "area types" damit verbreitert wird und welche Farbe der Überfüllrahmen erhalten soll.

Bei den Verfahren nach dem Stand der Technik müssen die Typen der grafischen Objekte auf der Druckseite und ihre Begrenzungen ermittelt werden. Wenn die Druckseite in einer objektorientierten Seitenbeschreibungssprache, wie z.B. PostScript, definiert ist, kann dies durch Analyse der Seitenbeschreibung erfolgen. Ein solches Verfahren ist in der Patentschrift US 5,295,236 beschrieben. Liegt die Druckseite nicht in einer objektorientierten Beschreibung vor, sondern z.B. als Matrix von Bildpunkten, so müssen die grafischen Objekte und ihre Begrenzung mit Verfahren der Mustererkennung ermittelt werden. Solche Verfahren sind sehr rechenaufwendig.

Weiterer Rechenaufwand entsteht bei den Verfahren nach dem Stand der Technik durch die Berechnung des Überfüllrahmens selbst. Nachdem entschieden ist, welches Objekt zu überfüllen ist, muss ein Rahmen mit bestimmter Überfüllweite für den Umriss des Objekts berechnet werden, wobei der Umriss eines grafischen Objekts im allgemeinen als eine Folge von Vektoren vorliegt. Wenn das grafische Objekt auf einem Teil seiner Begrenzung von einer Farbe und auf anderen Teilen seiner Begrenzung von anderen Farben umgeben ist, ist im allgemeinen nur für die Teile der Begrenzung ein Überfüllrahmen zu berechnen, für die aufgrund der aneinander grenzenden Farben ein Überfüllrahmen erforderlich ist. Wenn die Druckseitendaten nicht in einer vektoriellen Beschreibung vorliegen, sondern als Matrix von Bildpunkten, so müssen zunächst Konturpunkte ermittelt werden, die auf den Farbgrenzen liegen. Auf der Basis von Vektoren, die die Konturpunkte verbinden, können dann die Überfüllrahmen berechnet werden.

In der Patentschrift DE 197 35 380 wird ein Verfahren zur Berechnung von Überfüllrahmen beschrieben, das auf einer Distanzkartierung beruht. Das Verfahren setzt voraus, dass die Druckseitendaten als Bildpunktmatrix vorliegen. Mit der Distanzkartierung wird z.B. für jeden Bildpunkt außerhalb eines Objektes ein Abstandsvektor bestimmt, der den Abstand zu einem nächstliegenden Bildpunkt auf dem Rand des Objektes angibt. Den Überfüllrahmen zu dem Objekt bilden dann alle Bildpunkte, deren Abstandsvektor betragsmäßig kleiner oder gleich der Überfüllweite w ist. Eine Methode zur Berechnung einer Distanzkartierung ist beispielsweise beschrieben in dem Fachaufsatz von P.-E. Danielsson: "Euclidian Distance Mapping", Computer Graphics and Image Processing, Bd. 14, S. 227-248 (1980).

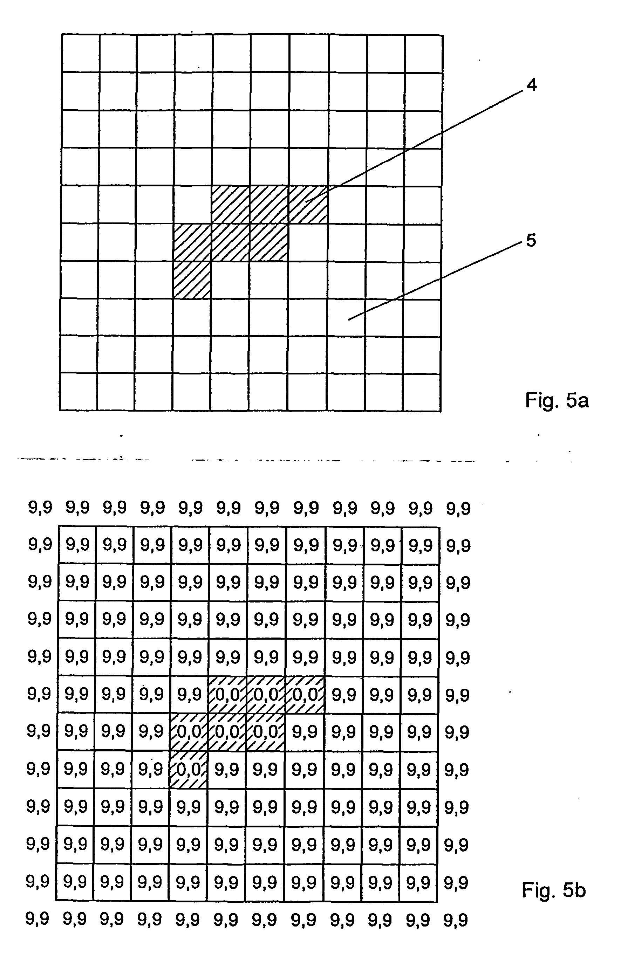

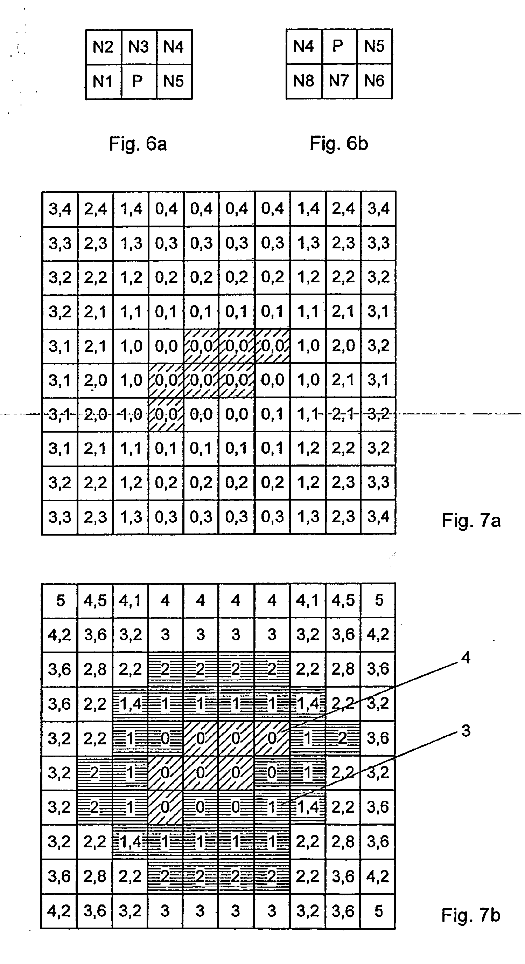

Die Methode der Distanzkartierung wird nachfolgend an einem einfachen Beispiel erläutert. Fig. 5a zeigt eine Bildpunktmatrix mit einem Objekt 4 auf einer Hintergrundfläche 5. Das Objekt 4 und die Hintergrundfläche 5 haben verschiedene Farben, und nach den anzuwendenden Überfüllregeln soll ein Überfüllrahmen um das Objekt 4 herum erzeugt werden. Fig. 5b zeigt eine zugehörige Distanzmatrix von Abstandsvektoren $D(x,y)$, wobei zu Beginn der Distanzkartierung den Bildpunkten innerhalb des Objektes 4 ein Abstandsvektor $D(x,y) = (0,0)$ und den Bildpunkten der Hintergrundfläche 5 ein maximaler Abstandsvektor, im Beispiel $D(x,y) = (9,9)$, zugeordnet wird. Die erste Komponente des Abstandsvektors $D(x,y)$ sei die x-Komponente, die zweite Komponente sei die y-Komponente. Außen um die Distanzmatrix herum befindet sich ein angenommener Rand von maximalen Abstandsvektoren $D(x,y) = (9,9)$. Nun wird in einem ersten Durchlauf ein Punktoperator F1 auf jeden Punkt der Distanzmatrix angewendet, wobei die Distanzmatrix zeilenweise von oben nach unten und in jeder Zeile von Bildpunkt zu Bildpunkt durchlaufen wird. Fig. 6a zeigt die Form des Punktoperators F1. Er besteht aus dem aktuell zu berechnenden Punkt P und den Nachbarpunkten N1, N2, N3, N4, N5 die links, rechts und oberhalb des Punktes P liegen. Aus den Abstandsvektoren $D(N1)$, $D(N2)$, $D(N3)$, $D(N4)$, $D(N5)$ der Nachbarpunkte wird durch Addition von bestimmten Inkrementen auf die x- und y-Komponenten jeweils ein neuer Abstandsvektor für den aktuellen Punkt P berechnet. Die Inkremente ergeben sich aus der relativen Lage der Nachbarpunkte N1, N2, N3, N4, N5 zum aktuellen Punkt P. Nur wenn die x-Komponente und/oder y-Komponente von einem oder mehreren der so berechneten Abstandsvektoren kleiner ist als die entsprechende Komponente des aktuellen Abstandsvektors $D(P)$, werden die Komponenten des aktuellen Abstandsvektors $D(P)$ durch die jeweils kleinsten Komponenten der neu berechneten Abstandsvektoren ersetzt.

$$D_{neu}(P) := \min \begin{cases} D(P) \\ D(N1) + (1,0) \\ D(N2) + (1,1) \\ D(N3) + (0,1) \\ D(N4) + (1,1) \\ D(N5) + (-1,0) \end{cases} \qquad (1)$$

In einem zweiten Durchlauf wird ein Punktoperator F2 auf jeden Punkt der Distanzmatrix angewendet, wobei die Distanzmatrix zeilenweise von unten nach oben und in jeder Zeile von Bildpunkt zu Bildpunkt durchlaufen wird. Fig. 6b zeigt die Form des Punktoperators F2. Er besteht aus dem aktuell zu berechnenden Punkt P und den Nachbarpunkten N4, N5, N6, N7, N8, die links, rechts und unterhalb des Punktes P liegen. Die Berechnungen des Punktoperators F2 sind analog zur Gleichung (1).

$$D_{neu}(P) = \min \begin{cases} D(P) \\ D(N4) + (-1,0) \\ D(N5) + (1,0) \\ D(N6) + (1,1) \\ D(N7) + (0,1) \\ D(N8) + (1,1) \end{cases} \qquad (2)$$

Fig. 7a zeigt die berechnete Distanzmatrix nach den Durchläufen der beiden Punktoperatoren F1 und F2. In der Nähe des Objektes 4 haben sich Abstandsvektoren mit kleinen Werten für die x-Komponente und y-Komponente ergeben, und mit zunehmender Entfernung vom Objekt 4 werden die Komponenten größer. Aus den x- und y-Komponenten der Abstandsvektoren wird der Betrag |D| des Abstands berechnet.

$$|D| = \sqrt{D_x^2 + D_y^2} \qquad (3)$$

Fig. 7b zeigt die Beträge |D| des Abstands. Der Überfüllrahmen 3 wird dann durch die Bildpunkte mit $|D| \leq w$ gebildet. In Fig. 7b ist der Überfüllrahmen 3 für die Überfüllweite w = 2 als Beispiel gekennzeichnet.

In der Reproduktionstechnik werden Überfüllrahmen vorwiegend für Texte und grafische Elemente, wie z.B. Zeichnungen oder farbige Flächen, generiert. Die entsprechenden Bilddaten werden in sehr hoher Auflösung zur Verfügung gestellt, z.B. 1000 Bildpunkte/cm und 1000 Zeilen/cm, um eine genügend gute Randschärfe der Konturen sicherzustellen. Um die Datenmenge zu reduzieren, werden die Grafik/Text-Bilddaten üblicherweise in einem Lauflängencodierten Datenformat gespeichert, wobei eine Folge von gleichfarbigen Bildpunkten in einer Zeile durch einen Lauflängencode beschrieben wird. Der Lauflängencode besteht beispielsweise aus einer 4 Byte langen Farbangabe, die die Farbauszugwerte CMYK der Bildpunkte in der Lauflänge kennzeichnet, und einer 2 Byte langen Lauflänge, die die Zahl der Bildpunkte in der Lauflänge kennzeichnet. Mit einer solchen Codierung können die Grafik/Text-Bilddaten erheblich komprimiert werden. Der erreichbare Komprimierungsfaktor hängt von der Anzahl und Dichte der Farbwechsel in den Grafik/Text-Bilddaten ab, ist aber typisch in der Größenordnung von 100 bis 200. Wegen dieser hohen Datenkomprimierung und der damit verbundenen Einsparung von Speicherplatz und Verarbeitungszeiten sind Grafik/Text-Bilddaten in einem Reproduktionssystem in einem Lauflängen-codierten Datenformat gespeichert.

Das beschriebene Verfahren zur Bestimmung von Überfüllrahmen mit Hilfe der Distanzkartierung hat den Nachteil, dass es nur mit Bilddaten durchgeführt werden kann, die in Form einer Bildpunktmatrix vorliegen. Deshalb müssen Lauflängencodierte Grafik/Text-Bilddaten vor der Verarbeitung nach diesem Verfahren dekomprimiert und in eine Bildpunktmatrix umgewandelt werden. Für eine DIN A4 Seite und die Auflösung 1000 Bildpunkte/cm ergibt sich eine Bildpunktmatrix von 21 x 29,7 x 1000 x 1000 = 623.700.000 Bildpunkten. Mit einer Farbcodierung von 4 Byte für jeden Bildpunkt (CMYK) ergibt das eine Datenmenge von 2.494.800.000 Byte, die Portionsweise von einer Festplatte in den Arbeitsspeicher eines Rechners geladen, mit dem Verfahren verarbeitet werden und wieder zurück gespeichert werden muss. Dabei muss zur Berechnung der Distanzkartierung jeder Bildpunkt mit seinen 8 Nachbarpunkten verglichen werden, d.h. die Zahl der erforderlichen Vergleiche ist entsprechend der hohen Bildpunktzahl sehr groß. Zusätzliche Zeit wird für das Dekomprimieren in eine Bildpunktmatrix und das anschließende Komprimieren der mit den Überfüllrahmen ergänzten Bilddaten in das Lauflängenformat verbraucht. Es ist offensichtlich, dass die Verarbeitungszeit für hoch aufgelöste Grafik/Text-Bilddaten so groß wird, dass das Verfahren der Distanzkartierung nach dem Stand der Technik nicht wirtschaftlich eingesetzt werden kann.

Es ist daher die Aufgabe der vorliegenden Erfindung, die Nachteile des bekannten Verfahrens zur Erzeugung von Überfüllrahmen mit Hilfe der Distanzkartierung zu vermeiden und ein verbessertes Verfahren anzugeben, mit dem eine Distanzkartierung direkt mit Lauflängen-codierten Grafik/Text-Bilddaten durchgeführt werden kann, ohne dass diese Daten vorher dekomprimiert und in eine Bildpunktmatrix umgewandelt werden müssen. Das verbesserte Verfahren benötigt einen erheblich geringeren Speicherplatz und ermöglicht eine deutliche Reduzierung der Verarbeitungszeit. Auf der Basis der so berechneten Distanzkartierung werden dann die Überfüllrahmen bestimmt. Die Aufgabe wird durch die Merkmale des Anspruchs 1 und der Unteransprüche 2 bis 9 gelöst.

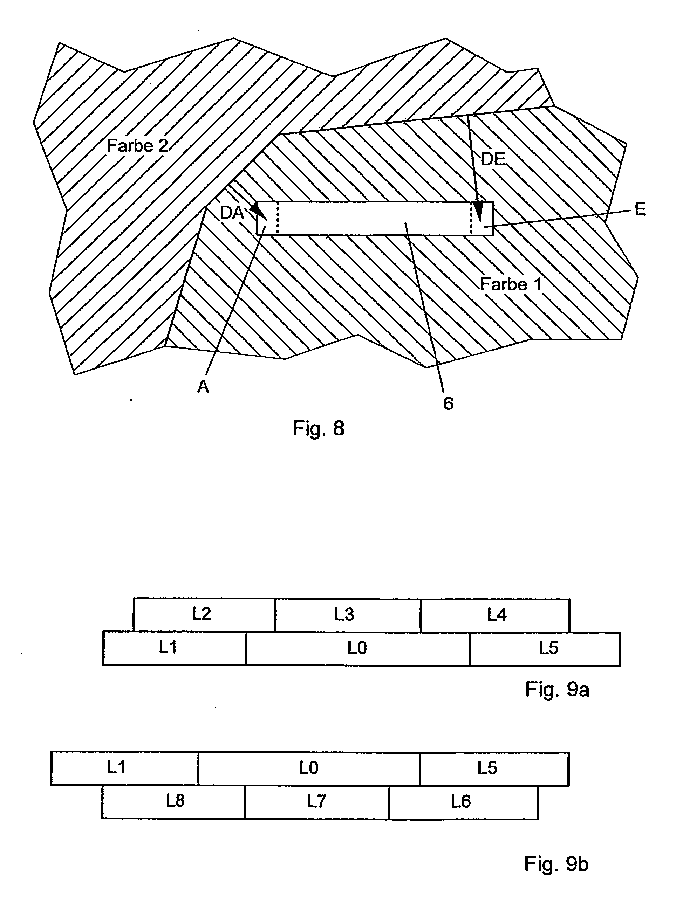

Nach dem erfindungsgemäßen Verfahren werden Abstandsvektoren jeweils für den Anfangspunkt und den Endpunkt der Lauflängen bestimmt und abhängig von den Abstandsvektoren der benachbarten Lauflängen fortgeschrieben. Fig. 8 zeigt eine Lauflänge 6, die sich in einem Gebiet der Farbe 1 befindet. Die Lauflänge 6 beschreibt eine Folge von gleichfarbigen Bildpunkten von einem Anfangspunkt A bis zu einem Endpunkt E. Ein Abstandsvektor DA beschreibt den kürzesten Abstand des Anfangspunktes A zu einem nächstliegenden Gebiet einer anderen Farbe 2. Ebenso beschreibt ein Abstandsvektor DE den kürzesten Abstand des Endpunktes E zu einem nächstliegenden Gebiet anderer Farbe. Die Abstandsvektoren haben jeweils eine x-Komponente und eine y-Komponente. Die Komponenten werden hier mit (DAx,DAy) für den Abstandsvektor DA und mit (DEx,DEy) für den Abstandsvektor DE bezeichnet. Die betragsmäßigen Distanzen werden beispielsweise als euklidische Distanz aus den Komponenten berechnet.

$$|DA| = \sqrt{DA_x^2 + DA_y^2}$$

$$|DE| = \sqrt{DE_x^2 + DE_y^2} \tag{4}$$

Es kann aber auch ein einfacheres Distanzmaß gewählt werden, beispielsweise:

$$|DA| = DA_x + DA_y$$

$$|DE| = DE_x + DE_y \tag{5}$$

Nach einer bevorzugten Ausführungsform der Erfindung werden für jeden Abstandsvektor neben den Komponenten für x und y noch die Farbe der zugehörigen Lauflänge und die Nachbarfarbe, zu der der Abstandsvektor den Abstand angibt, gespeichert. Die Farben können durch die Angabe der Farbauszugwerte gespeichert werden, beispielsweise CMYK und gegebenenfalls zusätzlicher Farbauszugwerte für einen fünften und weitere Farbauszüge. Wenn mit mehr als vier Farbauszügen gedruckt werden soll, ist es vorteilhafter, die Farben als Indexwert zu speichern, der in eine Farbtabelle zeigt. In der Farbtabelle sind unter dem entsprechenden Index alle zugehörigen Farbauszugwerte abgelegt.

In einem ersten Durchlauf durch die mit den Lauflängen beschriebenen Bilddaten zeilenweise von oben nach unten und in jeder Zeile von links nach rechts wird jede Lauflänge mit fünf benachbarten Lauflängen verglichen. Fig. 9a zeigt die relative Lage der aktuell bearbeiteten Lauflänge L0 und der benachbarten Lauflängen L1, L2, L3, L4, L5. Die Lauflänge L1 ist die Lauflänge, die der aktuellen Lauflänge L0 in der Zeile unmittelbar vorangeht. Die Lauflänge L2 ist die Lauflänge, die in der vorangegangenen Zeile links von der aktuellen Lauflänge L0 beginnt. Die Lauflänge L3 ist die Lauflänge, die in der vorangegangenen Zeile über der aktuellen Lauflänge L0 liegt. Die Lauflänge L4 ist die Lauflänge, die in der vorangegangenen Zeile rechts von der aktuellen Lauflänge L0 endet. Die Lauflänge L5 ist die Lauflänge, die der aktuellen Lauflänge L0 in der Zeile unmittelbar folgt. In einem zweiten Durchlauf durch die Bilddaten zeilenweise von unten nach oben und in jeder Zeile von rechts nach links wird die aktuelle Lauflänge L0 mit den fünf benachbarten Lauflängen L1, L5, L6, L7, L8 verglichen. Fig. 9b zeigt die relative Lage der aktuell bearbeiteten Lauflänge L0 und der benachbarten Lauflängen L1, L5, L6, L7, L8 für den zweiten Durchlauf. Im folgenden wird nur der erste Durchlauf näher beschrieben. Der zweite Durchlauf erfolgt in gleicher Weise spiegelsymmetrisch dazu.

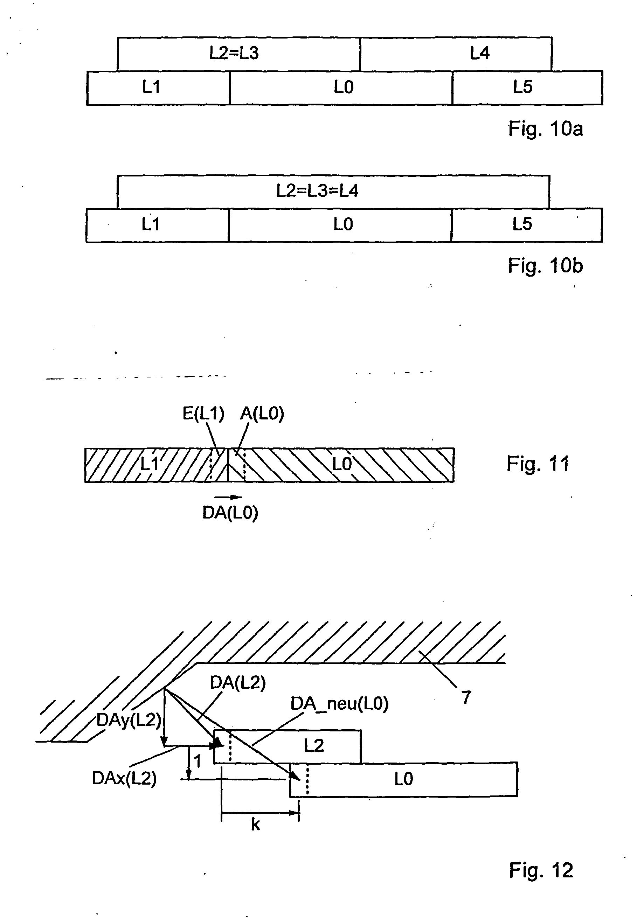

Es gibt in der Anordnung der Lauflängen Fälle, bei denen die aktuelle Lauflänge L0 weniger als fünf benachbarte Lauflängen hat. Fig. 10a zeigt eine Anordnung mit vier benachbarten Lauflängen, bei der die Lauflängen L2 und L3 zusammenfallen, und Fig. 10b zeigt eine Anordnung mit nur drei benachbarten Lauflängen, bei der die Lauflängen L2, L3 und L4 zusammenfallen. In diesen Fällen wird die aktuelle Lauflänge L0 mit der reduzierten Zahl der benachbarten Lauflängen verglichen.

Zu Beginn des ersten Durchlaufs werden die Komponenten aller Abstandsvektoren auf einen Maximalwert gesetzt. Beim Vergleich von zwei Abstandsvektoren von zwei benachbarten Lauflängen wird zunächst geprüft, ob die beiden Lauflängen die gleiche Farbe oder verschiedene Farben haben. Wenn sie verschiedene Farben haben, wird der bearbeitete Abstandsvektor der Lauflänge L0 entsprechend dem tatsächlichen Abstand zu dem verglichenen Anfangs- bzw. Endpunkt der benachbarten Lauflänge neu gesetzt und die entsprechende Nachbarfarbe in dem Abstandsvektor gespeichert. Fig. 11 veranschaulicht das an einem Beispiel. Die benachbarten Lauflängen L0 und L1 haben verschiedene Farben, was in Fig. 11 durch die unterschiedlichen Schraffuren gekennzeichnet ist. Der Anfangspunkt A(L0) der Lauflänge L0 und der Endpunkt E(L1) der Lauflänge L1 werden miteinander verglichen. Vom Endpunkt E(L1) aus gesehen liegt der Anfangspunkt A(L0) in derselben Zeile einen Bildpunkt rechts von E(L1). Die Komponenten des Abstandsvektors DA(L0) werden deshalb in diesem Beispiel auf DAx(L0) = 1 und DAy(L0) = 0 gesetzt.

Wenn die benachbarten Lauflängen die gleiche Farbe haben, wird für den bearbeiteten Abstandsvektor der Lauflänge L0 aus dem Abstandsvektor des verglichenen Anfangs- bzw. Endpunkt der benachbarten Lauflänge und dem tatsächlichen Abstand der beiden Punkte ein neuer Abstandsvektor berechnet. Fig. 12 veranschaulicht das an einem Beispiel. Gezeigt sind die aktuelle Lauflänge L0 und die benachbarte Lauflänge L2, sowie das Gebiet 7 der Nachbarfarbe. Der Anfangspunkt A(L0) der Lauflänge L0 und der Anfangspunkt A(L2) der Lauflänge L2 mögen miteinander verglichen werden. Der Abstandsvektor DA(L0) möge die Komponenten DAx_alt(L0) und DAy_alt(L0) haben (in Fig. 12 nicht dargestellt) und der Abstandsvektor DA(L2) die Komponenten DAx(L2) und DAy(L2). Vom Anfangspunkt A(L2) aus gesehen liegt der Anfangspunkt A(L0) in der nachfolgenden Zeile k Bildpunkte rechts von A(L2). Daraus wird ein neuer Abstandsvektor DA_neu(L0) mit den folgenden Komponenten berechnet.

$$DAx\_neu(L0) \doteq DAx(L2) + k$$
$$DAy\_neu(L0) = DAy(L2) + 1 \qquad\qquad (6)$$

Wenn die betragsmäßige Distanz |DA_neu(L0)| des neuen Abstandsvektors kleiner als die betragsmäßige Distanz |DA_alt(L0)| des alten Abstandsvektors ist, werden die alten Komponenten durch die neu berechneten Komponenten ersetzt.

Beim Vergleich der aktuellen Lauflänge L0 mit den benachbarten Lauflängen L1, L2, L3, L4, L5 werden der Anfangspunkt A(L0) und der Endpunkt E(L0) mit allen Anfangs- und Endpunkten der benachbarten Lauflängen verglichen, d.h. es werden verglichen:

| | | | |
|---|---|---|---|
| A(L0) mit A(L1) | A(L0) mit E(L1) | E(L0) mit A(L1) | E(L0) mit E(L1) |
| A(L0) mit A(L2) | A(L0) mit E(L2) | E(L0) mit A(L2) | E(L0) mit E(L2) |
| A(L0) mit A(L3) | A(L0) mit E(L3) | E(L0) mit A(L3) | E(L0) mit E(L3) |
| A(L0) mit A(L4) | A(L0) mit E(L4) | E(L0) mit A(L4) | E(L0) mit E(L4) |
| A(L0) mit A(L5) | A(L0) mit E(L5) | E(L0) mit A(L5) | E(L0) mit E(L5) |

Jedes Mal wird geprüft, ob die betragsmäßige Distanz für den neu berechneten Abstandsvektor kleiner als die betragsmäßige Distanz des alten Abstandsvektors ist, und wenn ja werden die neu berechneten x,y-Komponenten eingesetzt. Außerdem wird als Nachbarfarbe die Farbe eingetragen, zu der die kürzeste Distanz besteht. Danach wird die auf die aktuelle Lauflänge L0 folgende Lauflänge als nächste aktuelle Lauflänge genommen, und der Vorgang wird wiederholt.

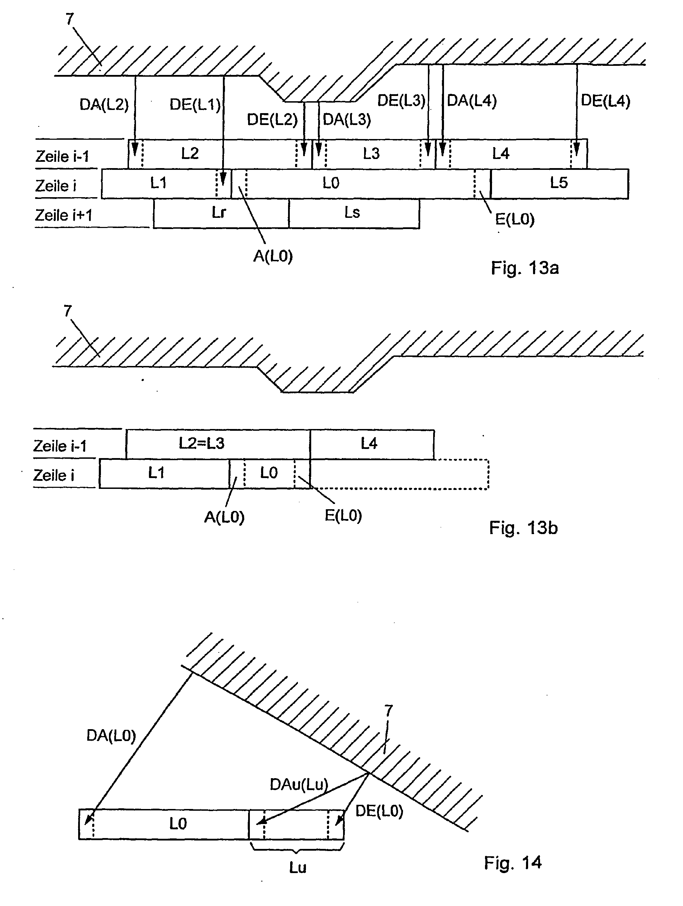

Bevor die Abstandsvektoren DA(L0) und DE(L0) der aktuellen Lauflänge L0 aufgrund der Abstandsvektoren der benachbarten Lauflängen L1, L2, L3, L4, L5 neu bestimmt werden, muss die aktuelle Lauflänge L0 gegebenenfalls in Teilstücke zerlegt werden. Fig. 13a veranschaulicht an einem Beispiel, warum das notwendig ist. Dargestellt sind die aktuelle Lauflänge L0 in der Zeile i, die benachbarten Lauflängen L1, L2, L3, L4, L5 in den Zeilen i-1 und i sowie zwei weitere darunter liegende Lauflängen Lr und Ls in der Zeile i+1. Außerdem ist das Gebiet 7 der Nachbarfarbe dargestellt und einige der Abstandsvektoren der benachbarten Lauflängen zu der Nachbarfarbe. In diesem Beispiel haben die Abstandsvektoren DE(L2) und DA(L3) eine kürzere Distanz zur Nachbarfarbe als die Abstandsvektoren DA(L2), DE(L1), DE(L3), DA(L4), DE(L4). In dieser Situation würde nach der anhand von Fig. 12 erläuterten Rechenvorschrift der neue kürzeste Abstandsvektor DA_neu(L0) auf der Basis des Abstandsvektors DE(L1) neu berechnet und der neue kürzeste Abstandsvektor DE_neu(L0) auf der Basis des Abstandsvektors DA(L4). Neu berechnete Abstandsvektoren auf der Basis der anderen gegebenen Abstandsvektoren würden länger werden und deshalb verworfen. Das hätte zur Folge, dass die Information über die kürzere Distanz der Abstandsvektoren DE(L2) und DA(L3) verloren gegangen wäre und bei der Bearbeitung der Lauflängen Lr und Ls in der folgenden Zeile i+1 nicht mehr berücksichtigt werden könnte. Wie das Beispiel von Fig. 13a zeigt, würden sich für die neu berechneten Abstandsvektoren der Lauflängen Lr und Ls kürzere Distanzen ergeben, wenn sie auf der Basis der Abstandsvektoren DE(L2) und DA(L3) berechnet würden. Nach dem erläuterten Verfahren ist das nicht möglich, da diese Abstandsvektoren nicht zu den benachbarten Lauflängen von Lr und Ls gehören.

Nach dem erfindungsgemäßen Verfahren wird deshalb vor der Neuberechnung der Abstandsvektoren die aktuelle Lauflänge L0 bei der x-Koordinate aufgetrennt, bei der sich in der darüber liegenden Zeile der Übergang zwischen den benachbarten Lauflängen L2 und L3 befindet. Fig. 13b zeigt die Aufteilung. Das linke abgetrennte Teilstück der ursprünglichen Lauflänge L0 wird die neue aktuelle Lauflänge L0. Das restliche Teilstück wird als neue auf L0 folgende Lauflänge L5 behandelt. Nach der Aufteilung fallen für die neue aktuelle Lauflänge L0 die benachbarten Lauflängen L2 und L3 zusammen, und die ursprüngliche Lauflänge L3 wird die neue Lauflänge L4. Durch die Aufteilung ist gewährleistet, dass die Abstandsvektoren aus der Zeile i-1 mit den kürzesten Distanzen zur Nachbarfarbe bei der Berechnung der Abstandsvektoren für die aktuelle Lauflänge berücksichtigt werden und auch in der folgenden Zeile i+1 fortgeschrieben werden können. Zweckmäßigerweise wird die Aufteilung der Lauflänge L0 nur dann vorgenommen, wenn wenigstens einer der relevanten Abstandsvektoren der Lauflängen L2 und L3 eine Distanz zur Nachbarfarbe hat, die kleiner oder gleich der Überfüllweite w ist. Nur dann tragen diese Abstandsvektoren zur späteren Bestimmung der Überfüllrahmen bei. Mit einem solchen Kriterium für die Aufteilung der Lauflänge L0 wird eine zu weitgehende und unnötige Zerstückelung der Lauflängen vermieden. Zusätzlich wird Verarbeitungszeit eingespart. Die Aufteilung der Lauflänge L0 muss nicht genau bei der x-Koordinate erfolgen, bei der in der Zeile i-1 die Lauflängen L2 und L3 aneinandergrenzen. Es ergibt sich auch eine ausreichende Distanzkartierung für die später zu bestimmenden Überfüllrahmen, wenn die Aufteilung von L0 in der Nähe der Grenze zwischen L2 und L3 erfolgt.

Nachdem im ersten Durchlauf von oben nach unten durch die Lauflängen-codierten Bilddaten und im anschließenden zweiten Durchlauf von unten nach oben die Abstandsvektoren der ursprünglichen Lauflängen und der durch Aufteilung neu entstandenen Lauflängen in der beschriebenen Weise neu berechnet worden sind, ist die Distanzkartierung abgeschlossen und die Abstandsvektoren haben die kürzeste Distanz zu der jeweils nächstliegenden Nachbarfarbe. Auf der Basis dieser Distanzkartierung werden anschließend die Überfüllrahmen bestimmt. Dazu wird auf Basis der gespeicherten Überfüllregeln, die angeben, welche Farben gegen welche anderen Farben überfüllt werden sollen, für jede Lauflänge geprüft, ob sie gegen die für sie eingetragene Nachbarfarbe überfüllt werden soll. Wenn das der Fall ist, wird anhand der Abstandsvektoren DA(L0) und DE(L0) entschieden, ob die ganze Lauflänge zum Überfüllrahmen gehört, ob ein Teil der Lauflänge zum Überfüllrahmen gehört oder ob die Lauflänge überhaupt nicht zum Überfüllrahmen beiträgt. Dazu wird die folgende Fallunterscheidung vorgenommen:

(a) $|DA(L0)| \leq w$ <u>und</u> $|DE(L0)| \leq w$ ⇨ die ganze Lauflänge gehört zum Überfüllrahmen
(b) $|DA(L0)| \leq w$ <u>und</u> $|DE(L0)| > w$ ⇨ ein linker Teil der Lauflänge gehört zum Überfüllrahmen
(c) $|DA(L0)| > w$ <u>und</u> $|DE(L0)| \leq w$ ⇨ ein rechter Teil der Lauflänge gehört zum Überfüllrahmen
(d) $|DA(L0)| > w$ <u>und</u> $|DE(L0)| > w$ ⇨ die Lauflänge gehört nicht zum Überfüllrahmen

Im Fall (a) wird die Farbe der Lauflänge durch die Überfüllfarbe ersetzt, die sich nach den Überfüllregeln ergibt. In den Fällen (b) und (c) gehört ein linker bzw. rechter Teil der Lauflänge zum Überfüllrahmen. Zur Bestimmung des Überfüllrahmens wird die Lauflänge dann in ein Teilstück Lu aufgeteilt, das zum Überfüllrahmen gehört und in ein Teilstück, das nicht zum Überfüllrahmen gehört. Fig. 14 zeigt das für den Fall (c) an einem Beispiel. Gezeigt ist eine Lauflänge L0, deren Abstandsvektor DA(L0) eine Distanz $|DA(L0)| > w$ zum Gebiet 7 der Nachbarfarbe hat und deren Abstandsvektor DE(L0) eine Distanz $|DA(L0)| \leq w$ zur Nachbarfarbe hat. Am rechten Ende der Lauflänge L0 wird ein Teilstück Lu abgetrennt, das Teil des Überfüllrahmens wird und die Überfüllfarbe bekommt. Die Trennstelle wird dabei so bestimmt, daß ausgehend vom Endpunkt des Abstandsvektors DE(L0) ein neuer Abstandsvektor DAu(Lu) zum Anfangspunkt des Teilstücks Lu die Distanz |DAu(Lu)| = w hat. Das restliche Teilstück der Lauflänge L0 gehört nicht zum Überfüllrahmen und behält seine ursprüngliche Farbe.

In einer weiteren Ausführungsform des erfindungsgemäßen Verfahrens wird die Verarbeitung beschleunigt, indem schon während der Distanzkartierung geprüft wird, ob nach den Überfüllregeln die Farbe der aktuellen Lauflänge L0 gegen andersfarbige benachbarte Lauflängen überfüllt werden soll. Wenn für die betreffende Farbpaarung keine Überfüllung erzeugt werden soll, wird die aktuelle Lauflänge L0 so behandelt, als hätten alle benachbarten Lauflängen die gleiche Farbe wie die aktuelle Lauflänge. Auf diese Weise ergeben sich weniger Abstandsvektoren mit einer Distanz ≤ w, d.h. es tritt weniger häufig die Notwendigkeit auf, die aktuelle Lauflänge L0 gemäß Fig. 13b oder Fig. 14 in Teilstücke zu zerlegen.

**Patentansprüche**

1. Verfahren zur Erzeugung von Überfüllrahmen (3) an Farbgrenzen in einer Druckseite, die in Form von Lauflängen-codierten Bilddaten vorliegt, wobei eine Lauflänge (6) eine Folge von Bildpunkten gleicher Farbe repräsentiert, mittels einer Distanzkartierung, **dadurch gekennzeichnet, dass**

   - die Distanzen der Lauflängen (6) zu einer benachbarten Farbe (7) bestimmt werden, ohne die Lauflängen (6) in eine Matrix von Bildpunkten zu decodieren, und
   - die Überfüllrahmen (3) auf der Basis der ermittelten Distanzen erzeugt werden.

2. Verfahren nach Anspruch 1, **dadurch gekennzeichnet, dass**

   - für den Anfangspunkt (A) und für den Endpunkt (E) einer Lauflänge (6) Abstandsvektoren (DA; DE) bestimmt werden,
   - für die Abstandsvektoren einer aktuellen Lauflänge (L0) aus dem Vergleich mit den Abstandsvektoren von benachbarten Lauflängen neue Werte (DA_neu; DE_neu) berechnet werden, und
   - die neuen Werte (DA_neu; DE-neu) die bisherigen Werte der Abstandsvektoren (DA_alt; DE_alt) der aktuellen Lauflänge (L0) ersetzen, wenn die betragsmäßigen Distanzen (|DA_neu|; |DE_neu|) der neuen Werte kleiner sind als die betragsmäßigen Distanzen (|DA_alt|; |DE_alt|) der bisherigen Werte.

3. Verfahren nach Anspruch 1 oder 2, **dadurch gekennzeichnet, dass**

   - die Lauflängen (6) in einem ersten Durchlauf der Bilddaten zeilenweise von oben nach unten und in jeder Zeile von links nach rechts verarbeitet werden, wobei die Abstandsvektoren (DA; DE) der aktuellen Lauflänge (L0) mit den Abstandsvektoren (DA; DE) von benachbarten Lauflängen (L1; L2; L3; L4) aus derselben Zeile und der darüber liegenden Zeile verglichen werden, und
   - die Lauflängen (6) in einem zweiten Durchlauf der Bilddaten zeilenweise von unten nach oben und in jeder Zeile von rechts nach links verarbeitet werden, wobei die Abstandsvektoren (DA; DE) der aktuellen Lauflänge (L0) mit den Abstandsvektoren (DA; DE) von benachbarten Lauflängen (L5; L6; L7; L8) aus derselben Zeile und der darunter liegenden Zeile verglichen werden.

4. Verfahren nach einem der Ansprüche 1 bis 3, **dadurch gekennzeichnet, dass** die Abstandsvektoren (DA; DE) der aktuellen Lauflänge (L0) mit jedem Abstandsvektor (DA; DE) der benachbarten Lauflängen (L1; L2; L3; L4) bzw. (L5; L6; L7; L8) verglichen werden.

5. Verfahren nach einem der Ansprüche 1 bis 4, **dadurch gekennzeichnet, dass**

   - die Abstandsvektoren (DA; DE) aus einer x-Komponente und einer y-Komponente bestehen,
   - für die Komponenten der neuen Werte (DAx_neu; DAy_neu; DEx_neu; DEy_neu) der Abstandsvektoren der aktuellen Lauflänge (L0) die Abstände der verglichenen Anfangspunkte (A) bzw. Endpunkte (E) in Zeilenrichtung für die x-Komponente und senkrecht zur Zeilenrichtung für die y-Komponente eingesetzt werden, wenn die verglichenen Lauflängen verschiedene Farben haben,oder
   - die Komponenten der neuen Werte (DAx_neu; DAy_neu; DEx_neu; DEy_neu) der Abstandsvektoren der aktuellen Lauflänge (L0) berechnet werden, indem die Abstände der verglichenen Anfangspunkte (A) bzw. Endpunkte (E) in Zeilenrichtung für die x-Komponente und senkrecht zur Zeilenrichtung für die y-Komponente auf die Komponenten (DAx; DAy; DEx; DEy) der Abstandsvektoren der verglichenen benachbarten Lauflängen (L1; L2; L3; L4) bzw. (L5; L6; L7; L8) addiert werden, wenn die verglichenen Lauflängen dieselbe Farbe haben.

**6.** Verfahren nach einem der Ansprüche 1 bis 5, **dadurch gekennzeichnet, dass** die aktuelle Lauflänge (L0) unterhalb der Grenze zwischen den benachbarten Lauflängen (L2; L3) für den ersten Durchlauf bzw. oberhalb der Grenze zwischen den benachbarten Lauflängen (L6; L7) für den zweiten Durchlauf aufgetrennt wird.

**7.** Verfahren nach Anspruch 6, **dadurch gekennzeichnet, dass** die aktuelle Lauflänge (L0) nur aufgetrennt wird, wenn die betragsmäßige Distanz (|DA|; |DE|) von mindestens einem Abstandsvektor (DA; DE) der benachbarten Lauflängen (L2; L3) bzw. (L6; L7) kleiner oder gleich einer Überfüllweite w ist.

**8.** Verfahren nach einem der Ansprüche 1 bis 7, **dadurch gekennzeichnet, dass**

- eine Lauflänge (6) zu einem erzeugten Überfüllrahmen (3) gehört, wenn die betragsmäßige Distanz (|DA|; |DE|) von beiden Abstandsvektoren (DA; DE) kleiner oder gleich einer Überfüllweite w ist, oder
- von einer Lauflänge (6) ein zu einem erzeugten Überfüllrahmen (3) gehörendes Teilstück (Lu) abgetrennt wird, wenn die betragsmäßige Distanz (|DA|; |DE|) von nur einem der beiden Abstandsvektoren (DA; DE) kleiner oder gleich einer Überfüllweite w ist, oder
- eine Lauflänge (6) nicht zu einem erzeugten Überfüllrahmen (3) gehört, wenn die betragsmäßige Distanz (|DA|; |DE|) von beiden Abstandsvektoren (DA; DE) größer als eine Überfüllweite w ist.

**9.** Verfahren nach einem der Ansprüche 1 bis 8, **dadurch gekennzeichnet, dass**

- während der Distanzkartierung geprüft wird, ob die Farbe der aktuellen Lauflänge (L0) gegen die Farbe der verglichenen benachbarten Lauflänge (L1; L2; L3; L4) bzw. (L5; L6; L7; L8) überfüllt werden soll, und
- wenn für die betreffende Farbgrenze kein Überfüllrahmen (3) erzeugt werden soll, die aktuelle Lauflänge (L0) so behandelt wird, als hätten die verglichene Lauflänge die gleiche Farbe wie die aktuelle Lauflänge (L0).

## Claims

**1.** Method of producing traps (3) by distance mapping at colour boundaries in a print page which is present in the form of run-length encoded image data, the run length (6) representing a sequence of pixels of equal colour, **characterized by** the fact

- that the distances of the run lengths (6) to an adjacent colour (7) are determined without decoding the run lengths (6) into a matrix of pixels, and
- that the traps (3) are produced on the basis of the determined distances.

**2.** Method according to Claim 1, **characterized by** the fact

- that distance vectors (DA; DE) are determined for the starting point (A) and the end point (E) of a run length (6),
- that new values (DA_neu; DE_neu) are calculated for the distance vectors of a current run length (L0) from a comparison with the distance vectors of adjacent run lengths, and
- that the new values (DA_neu; DE_neu) replace the previous values of the distance vectors (DA_alt; DE_alt) of the current run length (L0) if the magnitudes of the distances (|DA_neu|; |DE_neu|) of the new values are less than the magnitudes of the distances (|DA_alt|; |DE_alt|) of the previous values.

**3.** Method according to Claim 1 or 2, **characterized by** the fact

- that in a first pass of the image data, the run lengths (6) are processed line by line from top to bottom and from left to right in each line, the distance vectors (DA; DE) of the current run length (L0) being compared to the distance vectors (DA; DE) of adjacent run lengths (L1; L2; L3; L4) from the same line and the line above, and
- that in a second pass of the image data, the run lengths (6) are processed line by line from bottom to top and from right to left in each line, the distance vectors (DA; DE) of the current run length (L0) being compared to the distance vectors (DA; DE) of adjacent run lengths (L5; L6; L7; L8) from the same line and the line below.

**4.** Method according to any one of Claims 1 to 3, **characterized by** the fact that the distance vectors (DA; DE) of the current run length (L0) are compared to each distance vector (DA; DE) of the adjacent run lengths (L1; L2; L3; L4) or (L5; L6; L7; L8).

5. Method according to any one of Claims 1 to 4, **<u>characterized by</u>** the fact

- that the distance vectors (DA; DE) consist of an x component and a y component;
- that if the compared run lengths have different colours, the distances of the compared starting points (A) and end points (E) in the direction of the line for the x component and perpendicular to the direction of the line for the y component are used for the components of the new values (DAx_neu; DAy_neu; DEx_neu; DEy_neu) of the distance vectors of the current run length or
- that if the compared run lengths have the same colour, the components of the new values (DAx_neu; DAy_ neu; DEx_neu; DEy_neu) of the distance vectors of the current run length (L0) are calculated by adding the distances of the compared starting points (A) and end points (E) in the direction of the line for the x component and perpendicular to the direction of the line for the y component to the components (DAx; DAy; DEx; DEy) of the distance vectors of the compared adjacent run lengths (L1; L2; L3; L4) or (L5; L6; L7; L8).

6. Method according to any one of Claims 1 to 5, **<u>characterized by</u>** the fact

- that for the first pass, the current run length (L0) is subdivided underneath the boundary between the adjacent run lengths (L2; L3) and for the second pass, the current run length (L0) is subdivided above the boundary between the adjacent run lengths (L6; L7).

7. Method according to Claim 6, **<u>characterized by</u>** the fact that the current run length (L0) is only subdivided if the magnitude of the distance (|DA|; |DE|) of at least one distance vector (DA; DE) of the adjacent run lengths (L2; L3) or (L6; L7) is less than or equal to a trap width w.

8. Method according to any one of Claims 1 to 7, **<u>characterized by</u>** the fact

- that a run length (6) belongs to a produced trap (3) if the magnitude of the distance (|DA|; |DE|) of both distance vectors (DA; DE) is less or equal to a trap width w, or
- that a portion (Lu) belonging to a produced trap (3) is separated from a run length (6) if the magnitude (|DA|; |DE|) of the distance of only one of the two distance vectors (DA; DE) is less than or equal to a trap width w, or
- that a run length (6) does not belong to a produced trap (3) if the magnitude (|DA|; |DE|) of the distance of both distance vectors (DA; DE) is greater than a trap width w.

9. Method according to any one of Claims 1 to 8, **<u>characterized by</u>** the fact

- that during the distance mapping, a check is made whether the colour of the current run length (L0) is to be trapped with respect to the colour of the compared adjacent run length (L1; L2; L3; L4) or (L5; L6; L7; L8), and
- that if no trap (3) is to be produced for the relevant colour boundary, the current run length (L0) is treated as if the compared run length had the same colour as the current run length (L0).

**Revendications**

1. Procédé pour la production de contours de remplissage (3) à des limites de couleur dans une page à imprimer qui se présente sous forme de données d'images codées par longueur de parcours, une longueur de parcours (6) représentant une suite de point d'images de même couleur, au moyen d'une cartographie de distance, **caractérisé en ce que**

- les distances des longueurs de parcours (6) avec une couleur voisine (7) sont définies sans décoder les longueurs de parcours (3) dans une matrice de points d'image et
- **en ce que** les contours de remplissages (3) sont générés sur la base des distances déterminés.

2. Procédé selon la revendication 1, **caractérisé en ce que**

- pour le point de départ (A) et le point de fin € d'une longueur de parcours (6) des vecteurs d'espacement (DA; DE) sont définis,
- **en ce que** pour les vecteurs d'espacement d'une longueur de parcours actuelle (LO), de nouvelles valeurs (DA_neu; DE_neu) sont calculées à partir de la comparaison avec les vecteurs d'espacement de longueurs de parcours voisines, et

- les nouvelles valeurs (DA_neu; DE_neu) remplacent les anciennes valeurs des vecteurs d'espacement (DA_ alt; DE_alt) de la longueur actuelle de parcours (L0), si le montant de distances (¦DA_neu¦; ¦DE_neu¦) des nouvelles valeurs sont inférieures aux montants des distances (¦DA_alt¦; ¦DE_alt¦) des anciennes valeurs.

3. Procédé selon la revendication 1 ou 2, **caractérisé en ce que**

- **en ce que** les longueurs de parcours (6) sont traitées dans un premier passage des données d'images par ligne de haut en bas et dans chaque cellule de gauche à droite, les vecteurs d'espacement (DA; DE) des longueurs actuelles de parcours (L0) étant comparés avec les vecteurs d'espacement (DA; DE) de longueurs de parcours voisines (L1; L2; L3; L4) de la même ligne et des ligues au-dessus et
- **en ce que** les longueurs de parcours (6) sont traitées dans un second passage des données d'images par ligne de bas en haut et dans chaque cellule de droite à gauche, les vecteurs d'espacement (DA; DE) des longueurs actuelles de parcours (L0) étant comparés avec les vecteurs d'espacement (DA; DE) de longueurs de parcours voisines (L5; L6; L7; L8) de la même ligne et des ligues en-dessous.

4. Procédé selon l'une des revendications 1 à 3, **caractérisé en ce que** les vecteurs d'espacement (DA; DE) de la longueur actuelle de parcours (L0) sont comparés avec chaque vecteur d'espacement (DA; DE) des longueurs de parcours voisines (L1; L2; L3; L4) respectivement (L5; L6; L7; L8).

5. Procédé selon l'une des revendications 1 à 4, **caractérisé en ce que**

- les vecteurs d'espacement (DA; DE) se composent d'une composante x et d'une composante y, **en ce que** pour les composantes des nouvelles valeurs (DAx_neu; DAy_neu; DEx_neu; DEy_neu) des vecteurs d'espacement de la longueur actuelle de parcours (L0), les espacements des points de départ comparés (A) respectivement des points d'extrémité (E) sont utilisés dans le sens de ligne pour la composante x et perpendiculaire au sens de la ligne pour la composante y quand les longueurs de parcours comparées ont des couleurs différentes, ou
- les composantes des nouvelles valeurs (DAx_neu; DAy_neu; DEx_neu; DEy_neu) des vecteurs d'espacement de la longueur actuelle de parcours (L0) sont calculées dans le fait que les espacements des points de départ comparés (A) respectivement des points d'extrémité (E) sont additionnés dans le sens de la ligne pour la composante x et perpendiculairement au sens de la ligne pour les composante x aux composantes (DAx; DAy; DEx; DEy) des vecteurs d'espacement des longueurs de parcours comparées voisines (L1; L2; L3; L4) respectivement (L5; L6; L7; L8) si les longueurs de parcours ont la même couleur.

6. Procédé selon l'une des revendications 1 à 5, **caractérisé en ce que** la longueur actuelle de parcours (L0) est séparée en dessous de la limite entre les longueurs de parcours voisines (L2; L3) pour le premier passage respectivement au-dessus de la limite entre les longueurs de parcours voisines (L6; L7) pour le second passage.

7. Procédé selon la revendication 6, **caractérisé en ce que** les longueurs de parcours (L0) n'est séparée que si somme de la distance (¦DA¦; ¦DE¦) d'au moins un vecteur d'espacement (DA; DE) des longueurs de parcours voisines (L2; L3) respectivement (L6; L7) est inférieures ou égale à une largeur de remplissage w.

8. Procédé selon l'une des revendications 1 à 7, **caractérisé en ce qu'**une longueur de parcours (6) fait partie d'un contour de remplissage générés (3) si la somme de la distance (¦DA¦; ¦DE¦) de deux vecteurs d'espacement (DA; DE) est inférieure ou égale à une largeur de remplissage w ou **en ce qu'**une partie (Lu) faisant partie d'un cadre de remplissage (3) est séparée d'une longueur de parcours (6) si le montant de la distance (¦DA¦; ¦DE¦) d'une seule longueur de parcours (6) fait partie d'un contours de remplissage générés (3) si la somme de la distance ( (¦DA¦;¦ DE¦) d'un seul des deux vecteurs d'espacement (DA; DE) est inférieure ou égale à une largeur de remplissage w, ou

- **en ce que** qu'une longueur de parcours (6) ne fait pas partie d'un contour de remplissage généré (3) si la somme de la distance (¦DA¦; ¦DE¦) de deux vecteurs d'espacement (DA; DE) est supérieure à une largeur de remplissage w.

9. Procédé selon l'une des revendications 1 à 8, **caractérisé en ce que**

- pendant la cartographie de distance, il est vérifié si la couleur de la longueur de parcours actuelle (L0) doit être remplie par la couleur de la longueur de parcours comparée suivante (L1; L2; L3; L4) respectivement (L5;

L6; L7; L8) et

- si aucun cadre de remplissage (3) ne doit être produit pour la limite de couleur concernée, la longueur de parcours actuelle (L0) sera traitée comme si la longueur de parcours comparée avait la même couleur que la longueur de parcours actuelle (L0).

Fig. 1

Fig. 2

Fig. 3

Fig. 4

Fig. 5a

Fig. 5b

| N2 | N3 | N4 |
|----|----|----|
| N1 | P | N5 |

Fig. 6a

| N4 | P | N5 |
|----|----|----|
| N8 | N7 | N6 |

Fig. 6b

| 3,4 | 2,4 | 1,4 | 0,4 | 0,4 | 0,4 | 0,4 | 1,4 | 2,4 | 3,4 |
|-----|-----|-----|-----|-----|-----|-----|-----|-----|-----|
| 3,3 | 2,3 | 1,3 | 0,3 | 0,3 | 0,3 | 0,3 | 1,3 | 2,3 | 3,3 |
| 3,2 | 2,2 | 1,2 | 0,2 | 0,2 | 0,2 | 0,2 | 1,2 | 2,2 | 3,2 |
| 3,2 | 2,1 | 1,1 | 0,1 | 0,1 | 0,1 | 0,1 | 1,1 | 2,1 | 3,1 |
| 3,1 | 2,1 | 1,0 | 0,0 | 0,0 | 0,0 | 0,0 | 1,0 | 2,0 | 3,2 |
| 3,1 | 2,0 | 1,0 | 0,0 | 0,0 | 0,0 | 0,0 | 1,0 | 2,1 | 3,1 |
| 3,1 | 2,0 | 1,0 | 0,0 | 0,0 | 0,0 | 0,1 | 1,1 | 2,1 | 3,2 |
| 3,1 | 2,1 | 1,1 | 0,1 | 0,1 | 0,1 | 0,1 | 1,2 | 2,2 | 3,2 |
| 3,2 | 2,2 | 1,2 | 0,2 | 0,2 | 0,2 | 0,2 | 1,2 | 2,3 | 3,3 |
| 3,3 | 2,3 | 1,3 | 0,3 | 0,3 | 0,3 | 0,3 | 1,3 | 2,3 | 3,4 |

Fig. 7a

| 5 | 4,5 | 4,1 | 4 | 4 | 4 | 4 | 4,1 | 4,5 | 5 |
|---|-----|-----|---|---|---|---|-----|-----|---|
| 4,2 | 3,6 | 3,2 | 3 | 3 | 3 | 3 | 3,2 | 3,6 | 4,2 |
| 3,6 | 2,8 | 2,2 | 2 | 2 | 2 | 2 | 2,2 | 2,8 | 3,6 |
| 3,6 | 2,2 | 1,4 | 1 | 1 | 1 | 1 | 1,4 | 2,2 | 3,2 |
| 3,2 | 2,2 | 1 | 0 | 0 | 0 | 0 | 1 | 2 | 3,6 |
| 3,2 | 2 | 1 | 0 | 0 | 0 | 0 | 1 | 2,2 | 3,2 |
| 3,2 | 2 | 1 | 0 | 0 | 0 | 1 | 1,4 | 2,2 | 3,6 |
| 3,2 | 2,2 | 1,4 | 1 | 1 | 1 | 1 | 2,2 | 2,8 | 3,6 |
| 3,6 | 2,8 | 2,2 | 2 | 2 | 2 | 2 | 2,2 | 3,6 | 4,2 |
| 4,2 | 3,6 | 3,2 | 3 | 3 | 3 | 3 | 3,2 | 3,6 | 5 |

Fig. 7b

Fig. 8

Fig. 9a

Fig. 9b

| L2=L3 | L4 |
|-------|----|

| L1 | L0 | L5 |
|----|----|----|

Fig. 10a

| L2=L3=L4 | | |
|----------|--|--|

| L1 | L0 | L5 |
|----|----|----|

Fig. 10b

E(L1)   A(L0)

L1   L0

DA(L0)

Fig. 11

DA(L2)

DAy(L2)

DA_neu(L0)

DAx(L2)

L2

L0

7

1

k

Fig. 12

7

DA(L2)  DE(L1)  DE(L2)  DA(L3)  DE(L3)  DA(L4)  DE(L4)

| Zeile i-1 | | L2 | | L3 | | L4 | |
| Zeile i | L1 | | L0 | | | L5 | |
| Zeile i+1 | | Lr | | Ls | | | |

E(L0)

A(L0)

**Fig. 13a**

7

| Zeile i-1 | | L2=L3 | | L4 | |
| Zeile i | L1 | | L0 | | |

A(L0)   E(L0)

**Fig. 13b**

DA(L0)

DAu(Lu)

DE(L0)

7

| L0 | | |

Lu

**Fig. 14**

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5113249 A
- US 5295236 A
- DE 19735380

**In der Beschreibung aufgeführte Nicht-Patentliteratur**

- **P.-E. DANIELSSON.** Euclidian Distance Mapping. *Computer Graphics and Image Processing,* 1980, vol. 14, 227-248